# EUROPÄISCHE PATENTSCHRIFT

(11) **EP 0 515 929 B1**
(45) Veröffentlichungstag und Bekanntmachung des Hinweises auf die Patenterteilung: **29.07.1998**
(21) Anmeldenummer: 92108262.4
(22) Anmeldetag: 15.05.1992
(51) Int. Cl.: F04C 23/00, F04C 29/02

(54) **An einem Motorgehäuse eines Kraftfahrzeugmotors befestigte Flügelzellenvakuumpumpe**
Vacuum vane pump mounted on the motor housing of a vehicle engine
Pompe à vide à palettes montée sur le boîtier d'un moteur d'un véhicule à moteur

(30) Priorität: 29.05.1991 DE 4117590; 25.06.1991 DE 4120866; 12.10.1991 DE 4133821
(43) Veröffentlichungstag der Anmeldung: 02.12.1992
(73) Patentinhaber: LuK Automobiltechnik GmbH & Co. KG, 42499 Hückeswagen (DE)
(72) Erfinder: Hertell, Siegfried, W-5608 Radevormwald (DE); Lange, Robert, W-5608 Radevormwald (DE)
(74) Vertreter: Gleiss & Grosse

(56) Entgegenhaltungen:
- EP-A- 0 320 795
- DE-A- 3 734 573
- DE-A- 3 805 346
- US-A- 1 660 287

## Beschreibung

Die Erfindung betrifft eine an einem Motorgehäuse eines Kraftfahrzeugmotors befestigte Flügelzellenvakuumpumpe nach dem Oberbegriff des Anspruchs 1.

Flügelzellenvakuumpumpen sind aus der DE 41 09 873 und der DE 40 16 014, von welcher der Oberbegriff des Anspruchs 1 ausgeht, bekannt, wobei das jeweilige Pumpengehäuse glockenförmig ausgebildet ist. Es wird jeweils durch eine Platte an einer Stirnseite verschlossen. In dieser Platte ist die Rotorwelle gelagert. Die Pumpe wird mit der Platte an das Motorgehäuse angeflanscht. Bei dieser Bauart ergibt sich der Nachteil, daß Antriebswelle und Rotorwelle bei der Montage der Pumpe an das Motorgehäuse in genau fluchtende Verbindung gebracht werden müssen. Hierzu ist eine Zentrierung an dem Flansch und dem Motorgehäuse erforderlich, die genau zentrisch zu der Rotorwelle vorgenommen werden muß. Diese Zentrierung behindert ein Auslaßventil, das an dem Flansch angeordnet ist. Ferner ist die Zentrierung aufwendig herzustellen.

Aus der US-A-1,660,287 ist eine Zahnradpumpe der eingangs genannten Art bekannt, deren Pumpengehäuse unter Zwischenschaltung einer Zentrierplatte mit einem Motorgehäuse verbunden ist. Eine Rotorwelle der Pumpe ist in einer ersten Hülse geführt, die in eine zweite, einen Flansch ausbildende Hülse eingepaßt ist. An dem Flansch der zweiten Hülse ist das Pumpengehäuse unter Zwischenschaltung der Zentrierplatte befestigt. Somit ist eine sehr aufwendige Konstruktion gegeben, bei der relativ viele Teil aufeinander abgestimmt werden müssen. Die Fertigung einer derartigen Pumpe ist somit sehr aufwendig, da zum einwandfreien Funktionieren der Pumpe nur Toleranzen in relativ geringen Größenordnungen zulässig sind. Je mehr Teile aufeinander abzustimmen sind, um so größer ist die Gefahr von Abweichungen, die eine Funktion beeinträchtigen könnten.

Der Erfindung liegt daher die Aufgabe zugrunde, eine Flügelzellenvakuumpumpe der gattungsgemäßen Art zu schaffen, die einfach aufgebaut ist und bei der insbesondere eine einfache Lagerung des Rotors beziehungsweise der Rotorwelle bei einwandfreier Funktion möglich ist.

Diese Aufgabe wird erfindungsgemäß dadurch gelöst, daß die Zentrierplatte ein als Lagergehäuse für die Rotorwelle dienendes, koaxial zur Rotorwelle verlaufendes, zylindrisches Rohr aufweist, welches in eine Erweiterung einer Lagerbohrung der Antriebswelle eingreift, wobei die Lagerbohrung und die Erweiterung im Motorgehäuse ausgebildet sind. Hierdurch wird erreicht, daß das zylindrische Rohr eine Doppelfunktion ausübt. Es dient einerseits als Radiallager für die Rotorwelle und übernimmt andererseits die Zentrierung der Pumpe bezüglich der Antriebswelle. Die Erfindung hat erkannt, daß es diese Ausgestaltung des Lagergehäuses ermöglicht, den ansonsten verwendeten Zentrierflansch wegzulassen. Die Rotorwelle lagert in dem Pumpengehäuse, wobei die Lagerbohrung für die Antriebswelle sowie die Zentrierbohrung für das Lagergehäuse der Pumpe in einem einheitlichen Arbeitsverfahren, namentlich mit einer einzigen Einspannung, hergestellt werden können, und wobei der Zentrier-Radius so klein ist, daß ein Auslaßventil außerhalb dieses Zentrier-Radius liegen kann und hinsichtlich Länge und Lage durch die Zentrierung nicht behindert wird. Vorteilhaft ist auch, daß die Zentrierung auf dem Außenumfang der Lagergehäuses -wie auch die Lagerbohrung im Inneren des Lagergehäuses- mit einer einzigen Einspannung hergestellt werden können.

Die Merkmale der Ansprüche 2 und 3 bieten Möglichkeiten, die Pumpe sowie die Rotorwelle der Pumpe auf einfache Weise mit Schmieröl zu versorgen. Beide Versionen unterscheiden sich darin, daß im Falle des Anspruchs 2 ein kontinuierlicher Ölstrom ermöglicht wird, während im Falle des Anspruchs 3 die geförderte Ölmenge nach Bedarf dosiert werden kann.

Die Merkmale des Anspruchs 4 ermöglichen eine einfache Montage der Pumpe, da auf die Verwendung von zusätzlichen Dichtungen verzichtet werden kann.

Das Pumpengehäuse stellt mit dem eingesetzten Rotor und der aufmontierten Montageplatte eine einfache Montageeinheit dar. Die Rotorwelle wird mit einer Kupplung, beispielsweise in Form von parallel vorspringenden Zapfen, versehen. Der Zusammenbau der Pumpe mit dem Motor geschieht dadurch, daß die Rotorwelle in die Lagerbohrung des Motors eingeführt und sodann das Pumpengehäuse mit den Zentrierplatte an das Motorgehäuse angeflanscht wird. Da die Zentrierung des Rotors und der Motorwelle in dem Pumpengehäuse bereits durch die Zentrierplatte erfolgt ist, ist beim Anflanschen keine weitere Zentrierung erforderlich. Die Zentrierung erfolgt auf einem sehr kleinen Radius. Daher kann ein Auslaßventil außerhalb dieses Zentrier-Radius liegen. Die Länge des Ventils und namentlich der Ventil zunge sowie die Lage wird durch die Zentrierung nicht behindert. Für Rotorwelle und Antriebswelle ist nur eine einzige Lagerung erforderlich, die in einem einzigen einheitlichen Arbeitsverfahren herstellbar ist.

Die Anbringung des Auslaßventils ist vereinfacht, da die Zunge ohne weiteres mit einer Durchsteckverbindung befestigt sein kann und trotzdem nicht die Bewegung der Flügel der Pumpe innerhalb der Hubkurve behindert ist. Über die Länge der Zunge kann erreicht werden, daß der Befestigungspunkt der Zunge außerhalb der Hubkurve zu liegen kommt und dennoch die Zunge die Auslaßöffnung, die innerhalb der Hubkurve liegt, zuverlässig abdichten kann.

Im folgenden wird die Erfindung anhand eines Ausführungsbeispiels beschrieben. Es zeigen:
- Figur 1: einen Axialschnitt durch eine nicht erfindungsgemäße Pumpe,
- Figur 2: einen Axialschnitt durch einen Teil des Motorgehäuses der Pumpe, um 90° versetzt zu Figur 1,
- Figuren 3,4: einen Radialschnitt durch die Pumpe der Figur 1
- Figur 5: einen Axialschnitt durch eine erfindungsgemäße Pumpe,
- Figur 6, 6a: je einen weiteren Axialschnitt durch die erfindungsgemäße Pumpe und
- Figur 7, 7a: je einen Axialschnitt durch eine nicht erfindungsgemäße Pumpe.

Für beide Ausführungen der nicht erfindungsgemäßen beziehungsweise erfindungsgemäßen Flügelzellenvakuumpumpe gilt die folgende Beschreibung. Abweichungen zwischen den beiden Ausführungen sind besonders kenntlich gemacht.

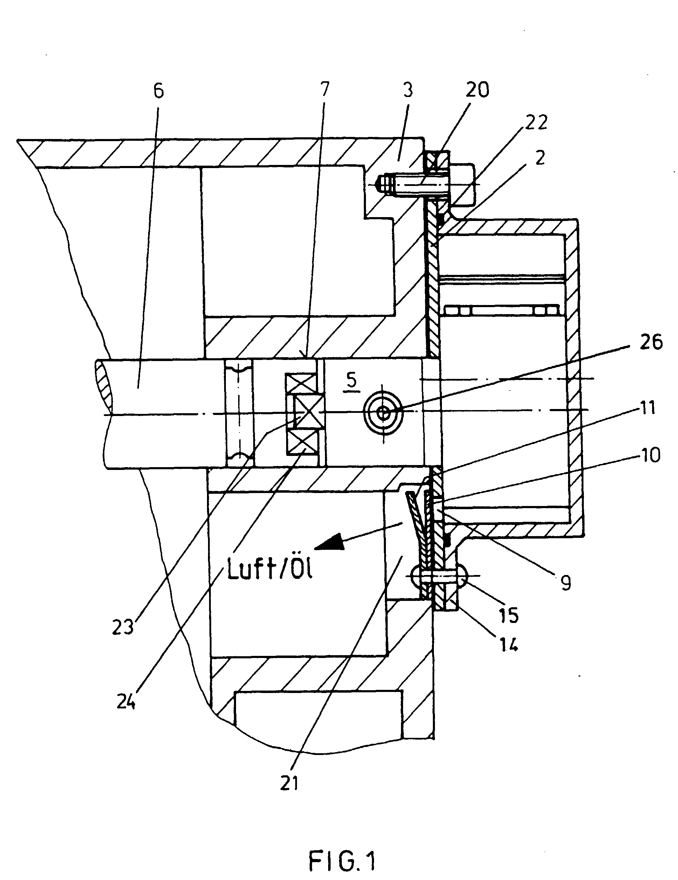

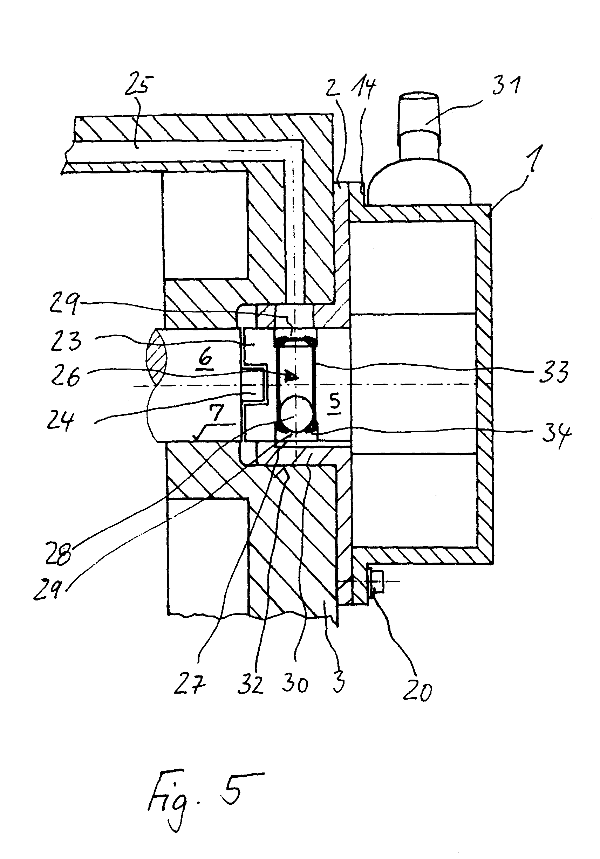

Das Pumpengehäuse der Flügelzellenvakuumpumpe ist ein kreiszylindrischer Topf 1. Der Mantel dieses Topfes 1 besitzt im Bereich seiner Öffnung einen radialen Flansch 14. Der Topf 1 der Pumpe nach den Figuren 1 bis 4 wird durch eine Zentrierplatte 2 verschlossen. Der Topf 1 der Pumpe nach Fig. 5 wird durch eine Flanschplatte 2 verschlossen, die ein Lagergehäuse 30 in Form eines zylindrischen Rohres besitzt. In dem Pumpengehäuse 1 ist ein Rotor 4 exzentrisch zum Pumpengehäuse 1 und drehbar gelagert. Der Rotor 4 besitzt in seiner Axialebene einen durchgehenden radialen Schlitz, in dem zwei aufeinanderliegende Flügel 8 und 81 radial gleitend bewegbar sind. Diese Flügel bilden in dem Pumpengehäuse umlaufende Zellen, die bei Drehung des Rotors sich fortwährend vergrößern und verkleinern und hierdurch die Pumpwirkung hervorrufen. Zur weiteren Ausgestaltung der Pumpe, ihres Rotors 4 und der Flügel 8, 81 wird auf die DE 35 07 176 A1 (Bag. 1396) verwiesen.

In dem Ausführungsbeispiel nach den Figuren 1 bis 4 weist die Zentrierplatte 2, in dem Ausführungsbeispiel nach Figur 5 die Flanschplatte 2 eine Auslaßöffnung 9 auf. Diese Auslaßöffnung 9 ist von außen durch ein im Bereich des Flansches 14 auf die Zwischenplatte 2 einseitig mittels Niet 15 befestigtes Zungenventil 10 verschlossen. Die Ventilzunge 10 wird durch eine Stützplatte 11 auf die Zentrierplatte 2 gedrückt. Um die Öffnung des Zungenventils 10 im Bereich der Auslaßöffnung 9 zu ermöglichen, ist die Stützplatte 11 in diesem Bereich aufgewölbt. Bezüglich der Ausbildung des Auslaßventiles an dem Ausführungsbeispiel nach Fig. 5 wird auf die vorhergehende Beschreibung wie auch die Figuren 1, 2, 3 und 4 Bezug genommen, wobei zu bemerken ist, daß die entsprechende Darstellung in Fig. 5 unterblieben ist, da das Auslaßventil 10 und die Auslaßöffnung 9 nicht in der Zeichenebene liegen.

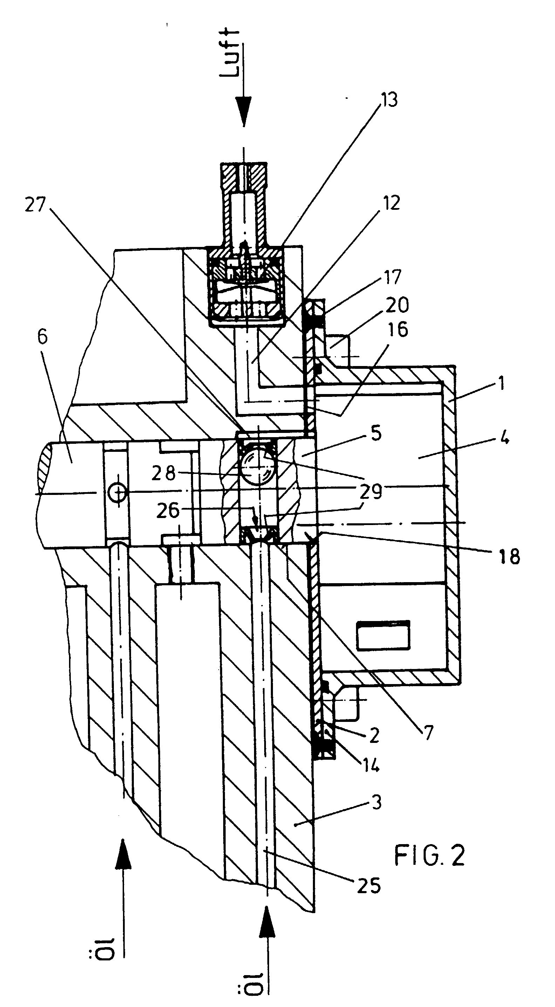

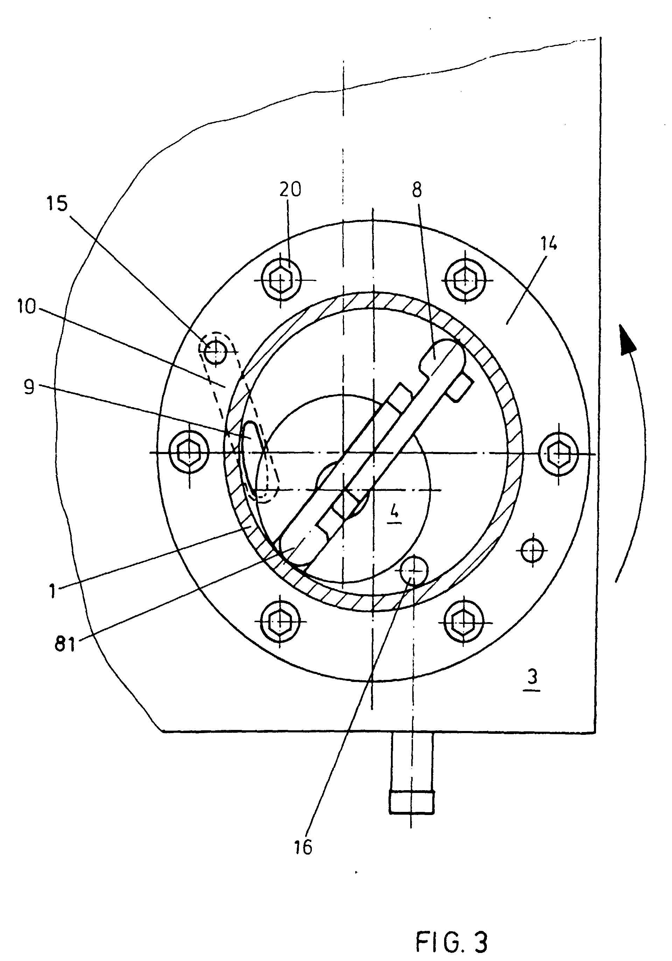

In dem Ausführungsbeispiel nach Figuren 1 bis 4 besitzt die Zentrierplatte 2 ferner eine Einlaßöffnung 16 (s. Figur 2). In dem Ausführungsbeispiel nach Fig. 5 ist die Einlaßöffnung (nicht dargestellt) auf dem Umfang des topfförmigen Pumpengehäuses 1 angeordnet. Fig. 5 zeigt den Einlaßstutzen 31, an dem ein Schlauch anschließbar ist. Die Auslaßöffnung 9 wie die Einlaßöffnung 16 sind dem unteren Totpunkt der Flügelbewegung, die in Fig. 3 gezeigt ist, benachbart. Auch hierzu wird auf die obengenannte DE 35 07 176 A1 verwiesen.

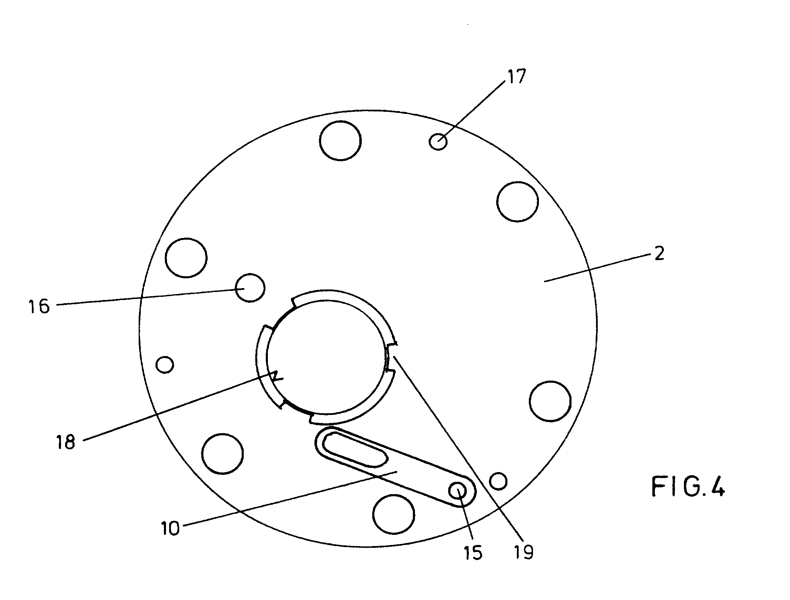

Zu dem Ausführungsbeispiel nach den Figuren 1 bis 4: Die Zentrierplatte 2 wird durch Schrauben 17 mit dem Flansch 14 (s. Figuren 1, 2, 3) des Pumpengehäuses 1 verbunden. Die Zentrierplatte 2 weist eine Zentrieröffnung 18 auf, die der Festlegung der Rotorwelle 5 in dem Pumpengehäuse 1 dient. Zur Festlegung dienen radiale Vorsprünge 19 der Zentrieröffnung 18. Hierzu wird auf Fig. 4 verwiesen. Das Pumpengehäuse 1 mit der auf dem Flansch 14 befestigten Zentrierplatte 2 und dem dadurch festgelegten Rotor 4 mit Flügeln 8, 81 bilden eine Baueinheit, die selbständig gefertigt, transportiert und auf Lager gehalten werden kann. Diese Baueinheit wird durch Schrauben 20, die den Flansch 14 und die Zentrierplatte 2 durchdringen, mit dem Motorgehäuse 3 verbunden. Das Motorgehäuse besitzt hierzu eine Lagerbohrung 7, die einerseits das Gleitlager für eine von dem Motor getriebene Antriebswelle 6 und zum anderen das Lager für die Rotorwelle 5 darstellt. Weiterhin besitzt das Motorgehäuse 3 eine Ausnehmung 21 zur Verbindung des Auslaßkanals 9 mit dem Motorraum. Die Ausnehmung 21 ist in dem Bereich angeordnet, in dem im eingebauten Zustand das Auslaßventil 10 liegen soll, und zwar auf der Außenseite der Zentrierplatte 2. Die Ausnehmung 21 ist entsprechend groß ausgeführt, wird jedoch in radialer Richtung von der Zentrierplatte 2 und dem Flansch 14 dichtend überdeckt. Der Flansch 14 und die Zentrierplatte 2 sind dichtend miteinander verbunden (Dichtung 22).

In das Motorgehäuse 3 ist ferner ein Einlaßkanal 12 eingebracht, der durch ein Einlaßventil 13 verschlossen wird. Eine geeignete Ausführung ergibt sich aus der DE 26 29 337 C2 (Bag. 986). Der Einlaßkanal 12 ist so im Motorgehäuse 3 angebracht, daß er im eingebauten Zustand mit der Einlaßöffnung 16 der Zentrierplatte 2 fluchtet.

Ohne eine Einschränkung der Erfindung auf dieses Ausführungsbeispiel zu sein, zeigt Fig. 2, daß der Einlaßkanal 12 der Pumpe durch das Motorgehäuse 3 geführt ist und achsparallel die Zentrierplatte 2 zum Innenraum der Pumpe durchstößt.

In diesem Fall ist als zusätzliche Besonderheit ein in Einlaßrichtung zur Pumpe öffnendes Rückschlagventil 13 am Motorgehäuse 3 angebracht.

Weiterhin kann vorgesehen sein, die Zentrierplatte 2 bzw. Flanschplatte (Fig. 5) und/oder das Motorgehäuse 3 im Bereich der Kanaldurchführungen (16; 9) und auf dem Umfang so auszugestalten, daß sich dort Paarungen von Dichtflächen ergeben.

Die Bohrungen, die den Flansch 14 und die Zentrierplatte 2 durchdringen und in die die Schrauben 20 zur Befestigung der Baueinheit an dem Motorgehäuse 3 eingeführt werden, haben einen größeren Durchmesser als die Schäfte der Schrauben 20.

Zur Montage der Pumpe wird die Rotorwelle 5 in die Lagerbohrung 7 des Motorgehäuses 3 eingeführt, und zwar so, daß die axial vorstehenden Kupplungslappen 23 der Rotorwelle mit den entsprechenden Kupplungslappen 24 der Antriebswelle 6 in Eingriff gebracht werden. Nunmehr kann das Pumpengehäuse 1 so verdreht werden, daß das Auslaßventil 10 mit der Ausnehmung 21 des Motorgehäuses und die Einlaßöffnung 16 der Zentrierplatte 2 mit dem Einlaßkanal 12 des Motorgehäuses 3 sowie die Bohrungen in Flansch und Zentrierplatte mit den entsprechenden Schraublöchern des Motorgehäuses 3 fluchten. Die Einhaltung einer besonderen Genauigkeit ist hierfür nicht erforderlich, da die Rotorwelle 5 durch die Zentrierplatte 2 bereits in dem Pumpengehäuse 1 festgelegt ist und hierdurch die Einhaltung der für die Pumpenfunktion erforderlichen engen Toleranzen gewährleistet ist. Da die Lagerungen für die Antriebswelle 6 und für die Rotorwelle 5 als Gleitlagerungen ausgeführt sind, sind auch hier keine weiteren Maßnahmen erforderlich.

Fig. 2 zeigt darüber hinaus Maßnahmen für die Ölzufuhr. Hierfür besitzt das Motorgehäuse 3 einen Ölkanal 25 (s. Fig. 2), der in der Normalebene einer Dosierbohrung 26 mündet. Die Dosierbohrung 26 ist radial gerichtet und kämmt auf der gegenüberliegenden Seite des Ölkanals 25 mit einer Axialnut 27, die vor dem Rotor 4 endet. In der Dosierbohrung 26 ist eine Kugel 28 zwischen zwei Sitzen 29 beweglich. Zur Funktion dieser Dosiereinrichtung wird auf die EP 0 406 800 A2 (EP-1731) verwiesen.

Zu dem Ausführungsbeispiel nach Fig. 5:
Die Flanschplatte 2 sowie das topfförmige Pumpengehäuse 1 werden durch Schrauben und mittels eines Flansches 14 des Pumpengehäuses 1 mit dem Motorgehäuse 3 verbunden. Hierzu ist das Lagergehäuse 30 als zylindrisches Rohr ausgebildet und auf seinem Außenumfang genau konzentrisch zur Rotorwelle 5 (s. Fig. 5) im Inneren des Lagergehäuses 30 bearbeitet. Ferner ist die Lagerbohrung 7 der Antriebswelle 6 an ihrem Ende mit größerem Durchmesser zu einer Erweiterung 32 aufgebohrt. Diese erweiterte Zentrierbohrung 32 liegt genau konzentrisch zu der Antriebswelle 6 bzw. der Lagerbohrung 7. Der Innendurchmesser der Zentrierbohrung 32 entspricht dem Außendurchmesser des Lagergehäuses 30. Das Pumpengehäuse 1 mit der auf dem Flansch 14 befestigten Flanschplatte 2 und dem dadurch festgelegten Rotor 4 mit Flügeln 8, 81 bilden eine Baueinheit, die selbständig gefertigt, transportiert und auf Lager gehalten werden kann. Diese Baueinheit wird durch weitere Schrauben 20, die den Flansch 14 und die Flanschplatte 2 durchdringen, mit dem Motorgehäuse 3 verbunden. Hierzu wird das Lagergehäuse 30 in die Zentrierbohrung 32 gesteckt und dabei die Rotorwelle mit ihrer endseitigen Kupplung 23 in Eingriff gebracht mit der Antriebswelle 6 und deren endseitiger Kupplung 24. Hierdurch ist die Pumpe bereits zentriert. Die Schrauben 20 und die zugehörigen Schraubenlöcher können daher ohne besondere Toleranzen gefertigt und eingebracht werden.

Das Motorgehäuse 3 besitzt eine hier nicht dargestellte Ausnehmung, vergleichbar der Ausnehmung 21 in den Figuren 1 bis 4.

Die Ausnehmung ist in dem Bereich angeordnet, in dem im eingebauten Zustand das Auslaßventil 10 liegen soll. Die Ausnehmung ist entsprechend groß ausgeführt, wird jedoch in radialer Richtung von der Flanschplatte 2 und dem Flansch 14 dichtend überdeckt. Der Flansch 14 und die Flanschplatte 2 sind dichtend miteinander verbunden (Dichtung nicht dargestellt).

Zur Ausführung des Einlaßventiles wird auf die DE 26 29 337 C2 verwiesen. Die Bohrungen, die den Flansch 14 und die Flanschplatte 2 durchdringen und in die die Schrauben 20 zur Befestigung der Pumpe an dem Motorgehäuse 3 eingeführt werden, haben einen Durchmesser, der größer als die Schäfte der Schrauben 20 ist.

Zur Montage der Pumpe wird das Lagergehäuse 30 in die Zentrierbohrung 32 des Motorgehäuses 3 eingeführt, und zwar so, daß die axial vorstehenden Kupplungslappen 23 der Rotorwelle 5 mit den entsprechenden Kupplungslappen 24 der Antriebswelle 6 in Eingriff gebracht werden. Nunmehr kann das Pumpengehäuse 1 so verdreht werden, daß das Auslaßventil 10 mit der Ausnehmung 21 des Motorgehäuses und die Bohrungen in Flansch 14 und Flanschplatte 2 mit den entsprechenden Schraubenlöchern des Motorgehäuses 3 fluchten. Die Einhaltung einer besonderen Genauigkeit ist hierfür nicht erforderlich, da die Rotorwelle 5 durch das Lagergehäuse 30 bereits relativ zu der Antriebswelle 6 zentrisch festgelegt und hierdurch die Einhaltung der für die Pumpenfunktion erforderlichen engen Toleranzen gewährleistet ist. Da die Lagerungen für die Antriebswelle 6 und für die Rotorwelle 5 als Gleitlagerungen ausgeführt sind, sind auch hier keine weiteren Maßnahmen erforderlich.

Fig. 5 zeigt ebenfalls Maßnahmen für die Ölzufuhr. Hierzu besitzt das Motorgehäuse 3 einen Ölkanal 25, der in der Normalebene einer Dosierbohrung 26 mündet. Die Dosierbohrung 26 durchdringt die Rotorwelle 5, ist radial gerichtet und kämmt auf der gegenüberliegenden Seite des Ölkanals 25 mit einer Axialnut 27, die vor dem Rotor 4 endet. Die Axialnut erstreckt sich vom Innengehäuse der Pumpe bis in die Normalebene. In der Dosierbohrung 26 ist eine Kugel 28 zwischen zwei Sitzen 29 frei beweglich. Zur Funktion dieser Dosiereinrichtung wird auf die EP 406 800 A2 verwiesen. Eine Besonderheit besteht darin, daß in die Dosierbohrung 26 eine Dosierpatrone 33 mit Sitzpassung eingepreßt ist. Hierbei handelt es sich um eine ballig federnde Patrone, die durch Einpassung in die Dosierbohrung 26 zusammengedrückt und durch ihre radial nach außen gerichteten Federkräfte in der Bohrung festgehalten wird. Die Patrone besitzt an beiden Enden eine Durchlaßöffnung, die als Sitz für die in der Patrone 33 bewegliche Kugel 28 dient. Auf dem Außenumfang des einen Endes der Patrone ist ein Bund fest angebracht, der auf einer Schulter der Dosierbohrung 26 in Achsrichtung der Dosierbohrung 26 aufliegt. Auf das andere Ende der Dosierpatrone 33 kann eine Stirnplatte 34 aufgesetzt werden, die durch Klipsverschluß fest in der Dosierpatrone 33 klemmbar ist. Der Außenumfang dieser Stirnplatte ist etwas größer als der Durchmesser der Dosierbohrung 26 und liegt auf einer Schulter der Dosierbohrung 26 auf. Hierdurch wird gewährleistet, daß die Dosierpatrone 33 im wesentlichen symmetrisch zur Drehachse von Rotorwelle 5 und Antriebswelle 6 festgelegt ist und sich nicht bewegen kann.

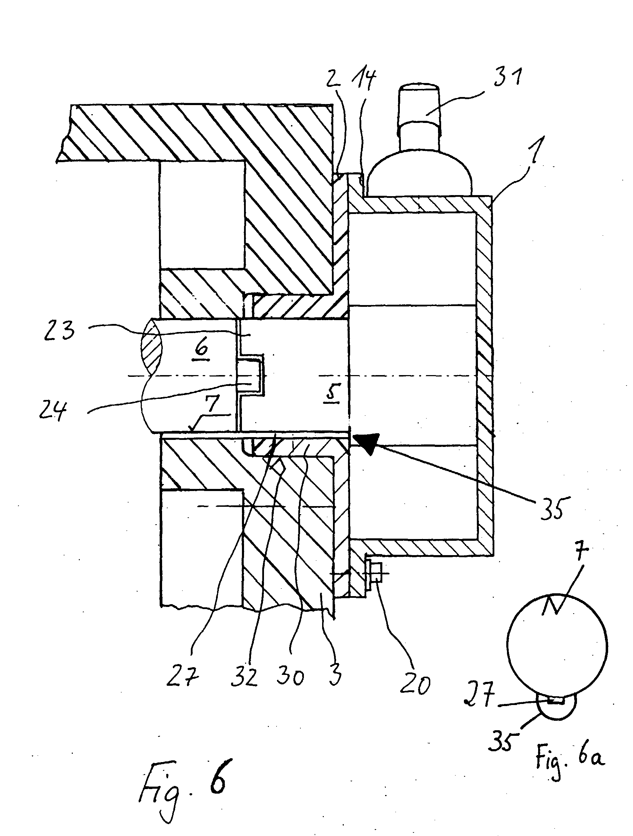

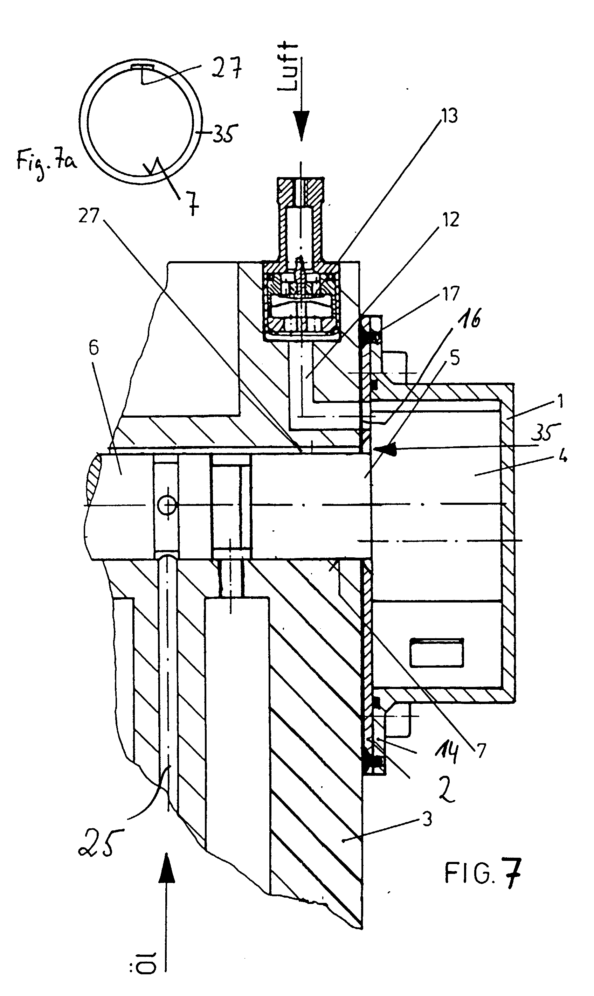

Die Figuren 6 und 7 entsprechen den bisherigen Beschreibungen, soweit nicht ausdrücklich etwas anderes gesagt worden ist.

Die Besonderheit der beiden Ausführungsbeispiele besteht in der Schmierölversorgung der Pumpe, die an den Ölkreislauf des Motors angeschlossen ist.

In beiden Fällen besitzt die Lagerbohrung 7 des Motorgehäuses 3 eine axiale Schmiernut 27, die sich über den Lagerbereich der Rotorwelle 5 erstreckt und über eine Erweiterung 35 der Bohrung 7 der Zentrierplatte bzw. Flanschplatte 2 im Innengehäuse der Pumpe mündet.

Im Falle der Fig. 7 besteht die zusätzliche Besonderheit darin, daß die axiale Schmiernut 27 über den Ölkanal 25 mit Schmieröl versorgt wird. Der Schmierölkanal mündet von der der axialen Schmiernut 27 gegenüberliegenden Seite in die Lagerbohrung 7. In diesem Bereich ist die Antriebswelle 6 ringförmig eingenutet. Hierdurch wird zwischen dem Ölkanal 25 und der axialen Schmiernut 27 eine durchgehende Verbindung geschaffen, welche der kontinuierlichen Schmierölversorgung der Pumpe dient.

Wie den Detaildarstellungen gemäß Fig. 6a und Fig. 7a zu entnehmen ist, kann die Erweiterung 35 ringförmig (s. Fig. 7a) oder im Bereich eines Teilumfangs (s. Fig. 6a) um die Lagerbohrung 7 angeordnet sein.

Der Vorteil der beiden Ausführungsbeispiele besteht darin, daß eine Zentrierung des Pumpengehäuses 1 relativ zur Antriebswelle 6 erfolgt, die nur einen kleinen Radius hat. Insbesondere ist der Radius so klein, daß Einlaß- und insbesondere Auslaßventile außerhalb dieses Zentrier-Radius liegen. Daher ist die Dimensionierung namentlich des Auslaßventiles 10 nicht durch die Zentrierung beschränkt. Im ersten Fall erfolgt die Zentrierung auf kleinem Radius mittels der Rotorwelle 5 selbst.

Im zweiten Fall geschieht die Zentrierung auf kleinem Radius durch den Außenumfang des Lagergehäuses 30. Es ist insbesondere aus den Figuren 3 und 4, die entsprechend auch für das Ausführungsbeispiel nach Fig. 5 gelten, zu erkennen, daß die Länge des Ventils 10 für die Auslaßöffnung 9 praktisch unbegrenzt ist, d. h. nur durch den Durchmesser des Pumpengehäuses und des Flansches 14 begrenzt ist.

### BEZUGSZEICHENAUFSTELLUNG

- 1: Pumpengehäuse
- 2: Zentrierplatte, Flanschplatte
- 3: Motorgehäuse
- 4: Rotor
- 5: Rotorwelle
- 6: Antriebswelle
- 7: Lagerbohrung
- 8: Flügel
- 9: Auslaßkanal
- 10: Auslaßventil
- 11: Stützplatte
- 12: Einlaßkanal
- 13: Einlaßventil
- 14: Flansch
- 15: Niet
- 16: Einlaßöffnung
- 17: Schrauben
- 18: Zentrieröffnung
- 19: Radialer Vorsprung
- 20: Schrauben
- 21: Ausnehmung
- 22: Dichtung
- 23: Kupplungslappen
- 24: Kupplungslappen
- 25: Ölkanal
- 26: Dosierbohrung
- 27: Axialnut
- 28: Kugel
- 29: Sitz
- 30: Lageransatz
- 31: Einlaßstutzen
- 32: Zentrierbohrung, Erweiterung
- 33: Dosierpatrone
- 34: Stirnplatte
- 35: Bohrungserweiterung
- 81: Flügel

## Patentansprüche

1. An einem Motorgehäuse eines Kraftfahrzeugmotors befestigte Flügelzellenvakuumpumpe zur Erzeugung eines Vakuums für Servoverbraucher, insbesondere Bremskraftverstärker in Kraftfahrzeugen, mit einem in einem Pumpengehäuse (1) angeordneten, drehfest auf einer Rotorwelle (5) gelagerten Rotor, wobei die Rotorwelle über eine Kupplung (23,34) mit einer Antriebswelle (6) des Kraftfahrzeugmotors verbunden ist, das Pumpengehäuse an das Motorgehäuse (3) angeflanscht ist und zwischen Motorgehäuse und Pumpengehäuse eine eine Zentrierbohrung aufweisende Zentrierplatte (2) angeordnet ist, die von der Rotorwelle durchgriffen wird, **dadurch gekennzeichnet**, daß die Zentrierplatte (2) ein als Lagergehäuse (30) für die Rotorwelle (5) dienendes, koaxial zur Rotorwelle (5) verlaufendes, zylindrisches Rohr aufweist, welches in eine Erweiterung (32) einer Lagerbohrung (7) der Antriebswelle (6) eingreift, wobei die Lagerbohrung (7) und die Erweiterung (32) im Motorgehäuse (3) ausgebildet sind.

2. Flügelzellenvakuumpumpe nach Anspruch 1, **dadurch gekennzeichnet**, daß die Lagerbohrung (7) des Motorgehäuses (3) eine axiale Schmiernut (27) besitzt, die sich über den Lagerbereich der Rotorwelle (5) erstreckt und über die Erweiterung (32) der Bohrung (7) der Zentrierplatte (2) im Innengehäuse der Flügelzellenvakuumpumpe mündet.

3. Flügelzellenvakuumpumpe nach einem der vorhergehenden Ansprüche, **dadurch gekennzeichnet,** daß in -dem Motorgehäuse (3) ein Ölkanal (25) für Schmieröl geführt ist, welcher in der Erweiterung (32) der Lagerbohrung (7) in einer Normalebene, in welcher eine Bohrung (Dosierbohrung (26)) die Rotorwelle (5) durchdringt, mündet, wobei die Schmiernut (27) auf der der Mündung des Ölkanals (25) gegenüberliegenden Seite der Rotorwelle (5) vom Innengehäuse der Flügelzellenvakuumpumpe bis in diese Normalebene reicht.

4. Flügelzellenvakuumpumpe nach einem der vorhergehenden Ansprüche, **dadurch gekennzeichnet,** daß die Zentrierplatte (2) mit dem Motorgehäuse (3) zumindest im Bereich von Kanaldurchführungen (16;9) und auf dem Umfang eine Paarung von Dichtflächen bildet.

## Claims

1. A vane vacuum pump, secured to an engine housing of a motor vehicle engine, for producing a vacuum for servo consuming devices, in particular power brakes in motor vehicles, having a rotor which is arranged in a pump housing (1) and is mounted in a rotationally-locked manner on a rotor shaft (5), the rotor shaft being connected to a drive shaft (6) of the motor vehicle engine via a coupling (23, 24), the pump housing being flange-mounted on the engine housing (3), and a centring plate (2) with a centring bore being arranged between the engine housing and the pump housing, which centring plate has the rotor shaft passing through it, characterised in that the centring plate (2) has a cylindrical tube which serves as a bearing housing (30) for the rotor shaft (5), runs coaxial with the rotor shaft (5) and engages into an enlargement (32) of a bearing bore (7) of the drive shaft (6), the bearing bore (7) and the enlargement (32) being formed in the engine housing (3).

2. A vane vacuum pump in accordance with Claim 1, characterised in that the bearing bore (7) of the engine housing (3) has an axial oil groove (27) which extends beyond the bearing region of the rotor shaft (5) and issues in the inner housing of the vane vacuum pump via the enlargement (32) of the bore (7) of the centring plate (2).

3. A vane vacuum pump in accordance with any one of the preceding Claims, characterised in that an oil channel (25) for lubricating oil extends in the engine housing (3), which oil channel (25) issues in the enlargement (32) of the bearing bore (7) in a normal plane in which a bore (metering bore (26)) passes through the rotor shaft (5), the oil groove (27) extending, on the side of the rotor shaft (5) opposite the mouth of the oil channel (25), from the inner housing of the vane vacuum pump right to this normal plane.

4. A vane vacuum pump in accordance with any one of the preceding Claims, characterised in that at least in the region of channel penetrations (16; 9) and on the periphery, the centring plate (2) with the engine housing (3) forms a pairing of sealing surfaces.

## Revendications

1. Pompe à vide à palettes montée sur le boîtier d'un moteur d'un véhicule à moteur pour produire un vide destiné à des mécanismes servoconsommateurs, en particulier des servofreins dans des véhicules à moteur, avec un rotor placé dans un corps de pompe (1) monté de façon fixe sur un arbre de rotor (5), dans laquelle l'arbre du rotor est relié par l'intermédiaire d'un dispositif d'accouplement (23, 24) à un arbre d'entraînement (6) du moteur d'un véhicule à moteur, le corps de pompe étant bridé au boîtier de moteur (3) et dans laquelle une plaque de centrage (2) présentant un alésage de centrage est disposée entre le boîtier de moteur et le corps de pompe, qui est traversée par l'arbre du rotor, caractérisée en ce que la plaque de centrage (2) présente, en tant que logement de palier (30), un tube cylindrique s'étendant coaxialement à l'arbre du rotor (5) et servant à l'arbre du rotor (5), qui s'emboîte dans un élargissement (32) d'un alésage de palier (7) de l'arbre d'entraînement (6), l'alésage de palier (7) et l'élargissement (32) étant formés dans le boîtier de moteur (3).

2. Pompe à vide à palettes selon la revendication 1, caractérisée en ce que l'alésage de palier (7) du boîtier de moteur (3) possède une rainure de graissage axiale (27), qui s'étend sur la zone de palier de l'arbre du rotor (5) et qui, par l'élargissement (32) de l'alésage (7) de la plaque de centrage (2), débouche dans le corps intérieur de la pompe à vide à palettes.

3. Pompe à vide à palettes selon l'une des revendications précédentes, caractérisée en ce qu'un canal de circulation d'huile (25) pour l'huile de graissage chemine dans le boîtier de moteur (3), qui débouche dans l'élargissement (32) de l'alésage de palier (7), dans un plan normal dans lequel un alésage (alésage de dosage (26)) traverse l'arbre du rotor (5), la rainure de graissage (27), sur le côté de l'arbre du rotor (5) opposé à l'embouchure du canal de circulation d'huile (25), allant du boîtier intérieur de la pompe à vide à palettes jusqu'à ce plan normal.

4. Pompe à vide à palettes selon l'une des revendications précédentes, caractérisée en ce que la plaque de centrage (2) forme avec le boîtier de moteur (3), au moins dans la zone des traversées du canal (16 ; 9) et sur la périphérie, un appariement de surfaces d'étanchéité.
